# EUROPEAN PATENT APPLICATION

(11) **EP 1 834 826 A1**
(43) Date of publication of application: **19.09.2007**
(21) Application number: 05811252.5
(22) Date of filing: 01.12.2005
(51) Int. Cl.: B60K 15/04, B21D 22/00

(54) **FILLER NECK STRUCTURE OF FUEL TANK AND METHOD OF MANUFACTURING FILLER NECK STRUCTURE OF FUEL TANK**

(30) Priority: 15.12.2004 JP 2004363046
(71) Applicant: Mitsubishi Fuso Truck and Bus Corporation, Kanagawa 212-0058 (JP)
(72) Inventor: SHIMIZU,Masayuki Mitsubishi Fuso Truck and Bus Co., Tokyo;1088285 (JP); FURUSAWA, Yukio c/o Hoei Kogyo Kabushiki Kaisha, Mooka-shi, Tochigi;3214346 (JP); AOYAMA, Yoshitaka c/o Hoei Kogyo Kabushiki Kaisha, Mooka-shi, Tochigi;3214346 (JP)
(74) Representative: Böck, Bernhard
(86) International application number: PCT/JP2005/022057
(87) International publication number: WO 2006/064665

(57) **Abstract**

For providing a high-productivity structure of a filler neck on a fuel tank, the filler neck structure on the fuel tank is made up of a first member (first tube member) 11 and a second member (second tube member) 12. More concretely, a first opening 15 communicating with the interior of the fuel tank 13 is formed in one end of the first member 11, while a second opening 16 communicating with the first opening 15 is formed in the other end thereof so as to make a first angle α₁ with respect to the first opening 15. In addition, the second member 12 having an outer diameter d₃ slightly smaller than the inner diameter d₂ of the second opening 16 of the first member 11 is fixed with the first member 11 in a state inserted into the second opening 16.

## Description

### FIELD OF THE INVENTION

The present invention relates to a structure of filler neck on a fuel tank and a method for producing a structure of filler neck on a fuel tank.

### BACKGROUND OF THE INVENTION

So far, a filler opening (fuel filler tube opening) has been provided in a fuel tank mounted on a vehicle so that the filling operation is conducted by inserting a filling nozzle into this filler opening while, in vehicles such as trucks where a fuel tank is located in the vicinity of the vehicle's outer circumference, a filler neck has been set directly on the fuel tank so that the filling operation is implemented by inserting a filling nozzle into this filler neck.
In addition, a cap is releasably put on a filler orifice forming an opening of the filler neck so as to prevent the fuel in the fuel tank from flowing outwardly and further to prevent foreign materials from being mixed into the fuel in the fuel tank. Incidentally, as a common technique on a filler neck, there has been known a technique written in a patent document 1 as Japanese Utility Model Laid-Open No. 5-89058.
Also disclosed in this patent document 1, preferably, for making maximum use of the capacity of the fuel tank, the filler neck is fixedly secured to an upper portion of the fuel tank.

However, in a case in which a fuel tank having a common filler neck as disclosed in the patent document 1 should be located under a suspension member of a vehicle such as load-carrying platform or subframe, there exists a problem in that the degradation of operability arises with respect to the attachment/detachment of the cap to/from the filler neck and difficulty arises in inserting a filling nozzle into the opening of the filler neck.
On the other hand, in view of the vehicle design, the fuel tank should be set at a position which can secure a space needed for the manipulation of the cap or at a position which can secure a space for the insertion of a filling nozzle into the opening of the filler neck. This reduces the degree of freedom of the vehicle design layout.
Moreover, as means for locating the opening of the filler neck forming a filler opening for the insertion of the filling nozzle at a given position, conceivable methods are to lengthen the overall length of the filler neck and to angularly bend the axis of the filler neck in an arbitrary direction. Meanwhile, for keeping the capacity of the fuel tank as large as possible, a shorter filler neck is more preferable. In particular, a vehicle, such as truck, which carries a fuel tank in a state located in the vicinity of the vehicle's outer circumference, requires shortening the overall length of the filler neck.

However, various technical difficulties arise when the axis of the filler neck is angularly bent while shortening the overall length thereof.
That is, a sufficiently long filler neck enables the axis of the filler neck to be bent in an arbitrary direction according to a technique referred to as the pipe bend, whereas it is actually impossible to bend a short filler neck through the use of this pipe bend technique.
Principally, this is because a short pipe material forming the filler neckmaterial makes it difficult for a processing machine to hold it reliably.

In addition, a conceivable way is to first bend a long pipe material through the use of the pipe bend technique and then cut short for a filler neck. However, the cut-off portions become a useless portion without being eventually used as a product. For this reason, this way is not desirable from the viewpoint of cost and environment protection.
For the production of a filler neck, another conceivable method is to make connections between some pipe materials at given angles through the use of the butt welding technique. However, the welding between the pipe materials in a state butted against each other (so-called butt welding) requires a high-level working technique, and the mechanization thereof also requires a lot of cost and takes a lot of trouble. Therefore, this method is remote from a technique outstanding in quantity production.

### DISCLOSURE OF THE INVENTION

### PROBLEMS TO BE SOLEVED BY THE INVENTION

The present invention has been developed with a view to eliminating these problems, and it is therefore a first object of the invention to provide a structure of filler neck on a fuel tank, which is superior in productivity.
A second object thereof is to provide a method of producing a structure of filler neck on a fuel tank, which is superior in productivity.

### MEANS FOR SOLVING THE PROBLEMS

For these purpose, in accordance with the present invention, there is provided a structure of filler neck on a fuel tank for vehicle comprising: a first tube member having a first opening formed at one end of the first tube member and a second opening which is in a first angle with respect to an edge of the first opening and is formed at another end of the first tube member; and a second tube member, inserted to the second opening so that the second tube member is fixed with the first tube member.

Preferably, in the above-described structure of filler neck on a fuel tank, the first tube member is made by the steps of; drawing a metal plate to cylindrical in shape, swelling a top end of the cylindrical shaped metal plate after the drawing, forming a sloped portion which is at the first angle with respect to a bottom end of the cylindrical shaped metal plate after the swelling in such a manner that deforming the swelled top end of the cylindrical shaped metal plate, and a punching step that is making the second opening at the sloped portion after the forming.

In addition,preferably,in the above-described structure of filler neck on a fuel tank, the second tube member has a filler orifice and a connector for releasably engaging with a cap covering the filler orifice, the second tube member is constant in outer diameter and is straight cylindrical tube in shape.

Furthermore, in accordance with the present invention, there is provided a method for producing a structure of filler neck on a fuel tank for a vehicle, the structure including: a first tube member having a first opening formed at one end of the first tube member and a second opening which is in a first angle with respect to an edge of the first opening and is formed at another end of the first tube member; and a second tube member, inserted to an fixed in the second opening, the method comprising steps of: a first drawing step that is drawing a metal plate to cylindrical in shape, a second drawing step that is swelling a top end of the cylindrical shaped metal plate after the first drawing step, an forming step that is forming a sloped portion which is at the first angle with respect to a bottom end of the cylindrical shaped metal plate after the second drawing step in such a manner that deforming the swelled top end of the cylindrical shaped metal plate, and a punching step that is making the second opening at the sloped portion after the forming step.

### ADVANTAGES OF THE INVENTION

A structure of filler neck on a fuel tank according to the present invention can not only facilitate the fixture between the first tube member and the second tube member but also contribute to the improvement of productivity and even dispose the second tube member with respect to the first tube member at an angle made between the first opening of the first tube member and the second opening thereof, which improves the workability of the filling to the fuel tank. In addition, this structure can enhance the degree of freedom of the mounting position of the fuel tank on a vehicle. In addition, the overall length of the filler neck can be shortened, which provides an advantage in that, particularly, in the case of vehicles in which the fuel tank is installed in a space near the vehicle's outer circumference, an issue that the filler neck protrudes from the vehicle's outer circumference is avoidable.

Still additionally, the first tube member is produced can prevent from cracking in the production process, thus contributing to further improvement of productivity. (Claim 2)
Yet additionally, the airtightness of the fuel tank is enhanced when the cap is equipped with the second tube member. (Claim 3)

In addition, with a method of producing a structure of filler neck on a fuel tank according to the present invention, it is possible to achieve efficient production of a structure of filler neck that includes a first tube member and a second tube member, is possible to enhance the workability of supplying fuel to a fuel tank, can enhance the degree of freedom of the mounting position of the fuel tank on a vehicle. (Claim 4)

### BRIEF DESCRIPTION OF THE DRAWINGS

[FIG. 1] FIG. 1 is a perspective view illustratively showing the entire shape of a structure of filler neck on a fuel tank according to an embodiment of the present invention;
[FIG. 2] FIG. 2 is a front elevational view illustratively showing a structure of filler neck on a fuel tank according to an embodiment of the present invention;
[FIG. 3] FIG. 3 is a side elevational view illustratively showing a structure of filler neck on a fuel tank according to an embodiment of the present invention;
[FIG. 4] FIG. 4 is a perspective view illustratively showing a fuel tank, a filler neck and a cap member according to an embodiment of the present invention;
[FIG. 5] FIG. 5 is an illustrative view showing a production process for a first member according to an embodiment of the present invention;
[FIG. 6] FIG. 6 is an illustrative view showing a production process for a first member according to an embodiment of the present invention;
[FIG. 7] FIG. 7 is an illustrative view showing a production process for a first member according to an embodiment of the present invention;
[FIG. 8] FIG. 8 is an illustrative view showing a production process for a first member according to an embodiment of the present invention;
[FIG. 9] FIG. 9 is an illustrative view showing a production process for a second member according to an embodiment of the present invention;
[FIG. 10] FIG. 10 is an illustrative view showing a production process for a second member according to an embodiment of the present invention;
[FIG. 11] FIG. 11 is a cross-sectional view illustratively showing a fuel tank according to an embodiment of the present invention; and
[FIG. 12] FIG. 12 is a cross-sectional view illustratively showing a flow of air in a fuel tank during an filling operation according to an embodiment of the present invention.

### DESCRIPTION OF REFERENCE NUMERALS

- 10: filler neck
- 11: first member
- 12: second member
- 13: fuel tank
- 15: first opening
- 16: second opening
- 19: cap (cap member)
- 21: filler ring
- α₁: predetermined angle

### BEST MODE FOR CARRYING OUT THE INVENTION

Referring to the drawings, a description will be given hereinbelow of a structure of filler neck on a fuel tank according to an embodiment of the present invention.

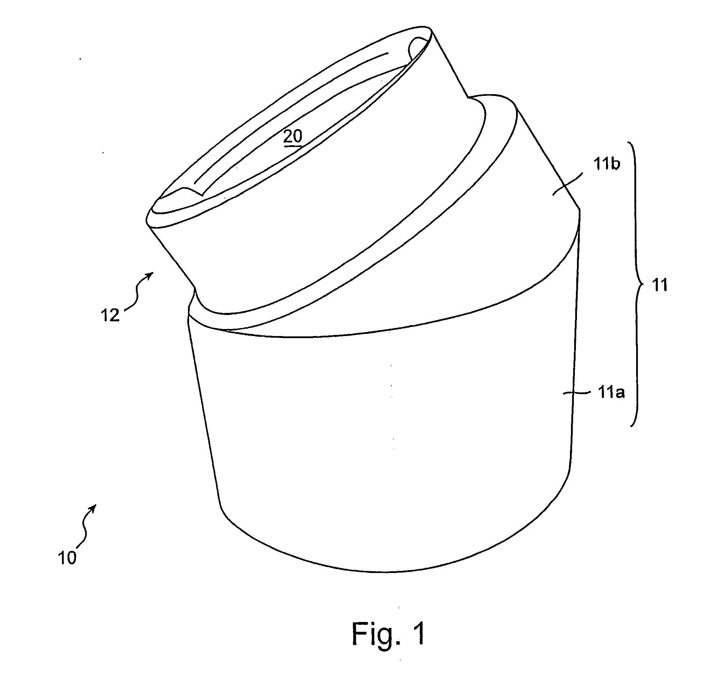

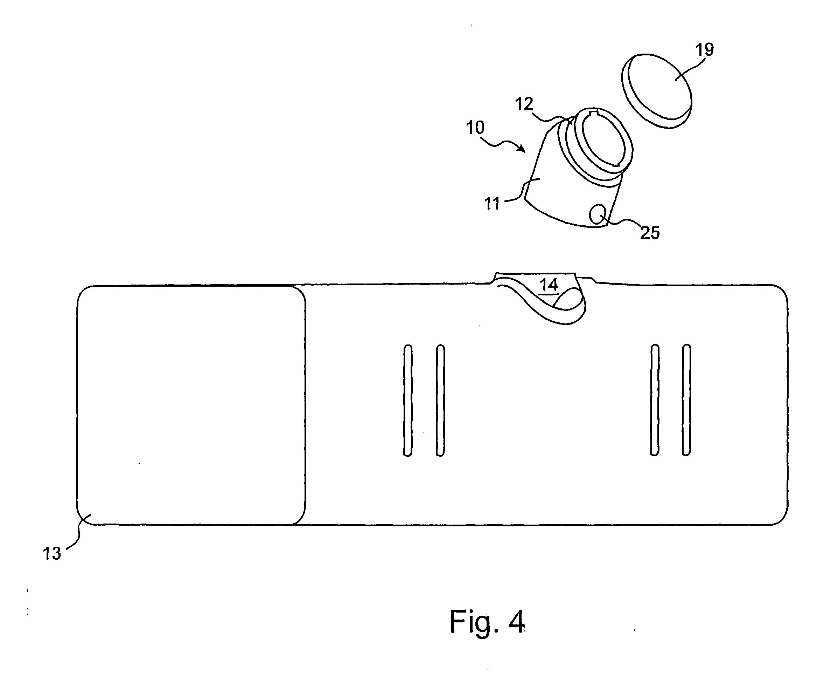

As shown in FIGs. 1 to 3, a filler neck, generally designated at reference numeral 10, is made up of a thick (large-sized) tube member (first tube member) 11 and a thin (small-sized) tube member (second tube member) 12.
Of these components, as shown in FIG. 4, the thick tube member 11 is a pipe to be inserted into a tank hole 14, formed at an upper portion of a fuel tank 13, and fixedly secured to the fuel tank 13 by means of welding, one end of which has a first opening 15 and the other end of which has a second opening 16. The first and second openings 15 and 16 are set to make a first angle α₁ with respect to each other.
The first opening 15 is made to communicate through the tank hole 14 with the interior of the fuel tank 13 and with the second opening 16, and the cross section thereof is circular in shape. The second opening 16 is an opening which permits the insertion of the thin tube member 12 thereinto, mentioned in detail later, and an inner-circumferential edge portion thereof is formed as a flange 16a.

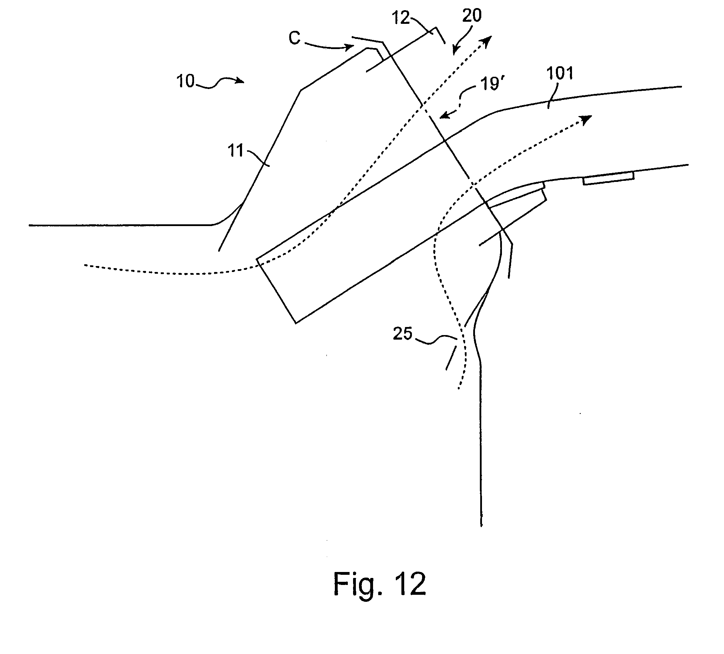

In other words, this thick tube member 11 is constructed in a manner such that a base portion 11a having a generally cylindrical configuration or shape based on an axis C₁, where the first opening 15 serves as a lower end opening, is integrated with a bent portion 11b having a tube configuration based on an axis C₂, where the second opening 16 serves as an upper end opening. In this construction, the angle made between the axis C₁ of the base portion 11a and the axis C₂ of the bent portion 11b is equal to the first angle α₁, i.e., the angle made between the first opening 15 and the second opening 16, and the thin tube member 12 can be inserted at the first angle α₁ into the second opening 16 to be fixedly secured to the thick tuber member 11.
In addition, a vent hole 25 is bored in a side surface of the thick tube member 11. This vent hole 25 is for, when a filling nozzle 101 is inserted into a fourth opening (filler orifice) 20 (mentioned later) of the thin tube member 12 for supplying a fuel from the filling nozzle 101 into the fuel tank 13 as shown in FIG. 12, smoothly facilitating the discharge of air, which exists in the interior of the fuel tank 13, to the exterior of the fuel tank 13.

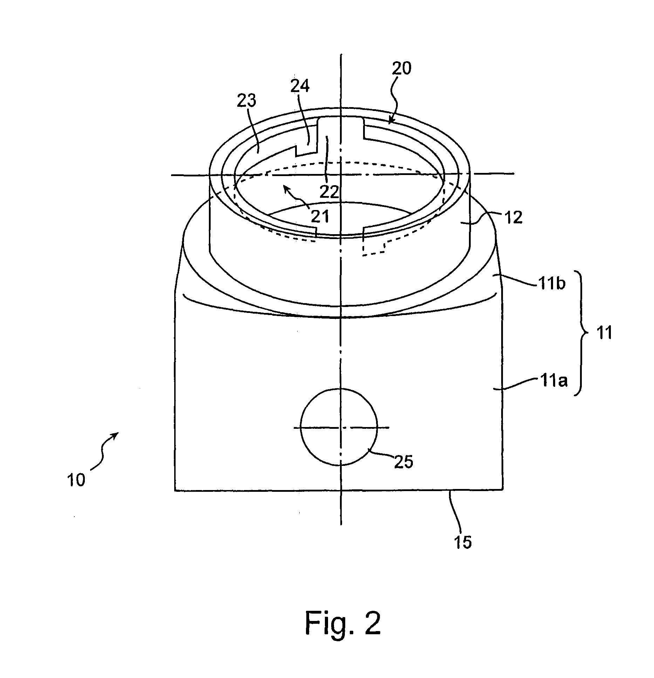

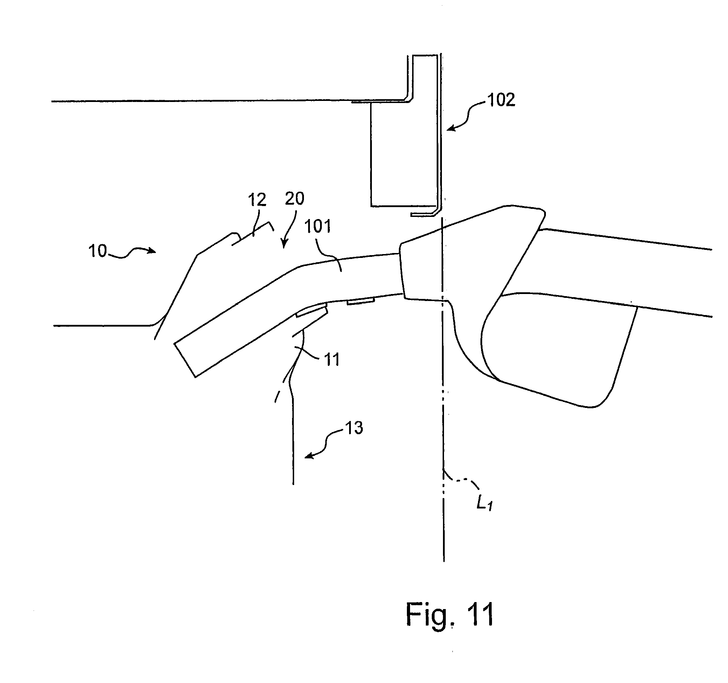

The thick tube member 11 is produced in a manner such that a drawing process and a die press process are conducted with respect to a metal plate, and these producing processes (producing method) will be described later.
Still additionally, the thin tube member 12 is a tube-like member having, at its one end side, a third opening 18 which is to be inserted into the second opening 16 of the thick tube member 11 and having, at the other end side, the fourth opening (filler opening) 20 which is made to communicate with the third opening 18, and accepts the insertion of the filling nozzle 101 (see FIG. 11) thereinto at a filling operation.
Yet additionally, as shown in FIG. 2, the fourth opening 20 is equipped with a filler ring 21 including cut-out portions 22, engaging portions 23 and contact portions 24 so that a cap 19 is releasably attached thereto as shown in FIG. 4.
In the filler ring 21, the cut-out portions 22, 22 are for the insertion of claw portions (not shown) of the cap 19, and the engaging portions 23, 23 engage with the claw portions of the cap 19 according to the rotation of the cap 19. Moreover, the contact portions 24, 24 come into contact with the claw portions of the cap 19 engaged with the engaging portions 23, 23, thus limiting the rotation of the cap 19.

The thin tube member 12 is also produced in a manner such that a drawing process is conducted with respect to a metal plate, and this producing method will be described later.
Furthermore, the thin tube member 12 is formed to have an outer diameter d₃ slightly smaller than an inner diameter d₂ of the second opening 16 of the thick tube member 11 so that the thin tube member 12 can be inserted into the second opening 16 of the thick tube member 11.
This enables an outer circumference of the thin tube member 12 and an edge portion of the second opening 16 to be fixed with each other through the use of a deposited metal (so-called brazing filler metal) after the thin tube member 12 is inserted into the second opening 16 of the thick tube member 11. It is also acceptable that, instead of the fixing using this brazing filler metal (so-called brazing), the thick tube member 11 and the thin tube member 12 are fixedly secured to each other by means of welding. In this connection, this thin tube member 12 is formed to be constant in outer diameter d₃ throughout its overall length (that is, it is formed into a straight shape).

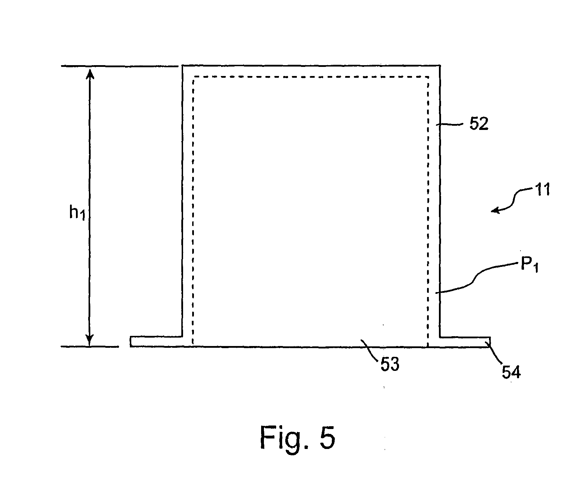

A structure of a filler neck on a fuel tank according to an embodiment of the present invention is constructed as described above, and it is produced as follows.
A description will first be given hereinbelow of a method of producing the thick tube member 11. As a first step, a first drawing process is conducted with respect to a metal plate P₁ so as to form a first drawn configuration as shown in FIG. 5 (first drawing step). Through this process, the thick tube member 11 is formed as including a cylindrical portion 52 having a generally cylindrical configuration (cylindrical in shape) and a flange portion 54 formed at an outer-circumferential edge of a lower opening 53 of this protrusion 52.
The lower opening 53 serves as the first opening 15 of the thick tube member 11 when completed, and the flange portion 54 acts as a support surface for holding the thick tube member 11 while the processingmachine is in operation.

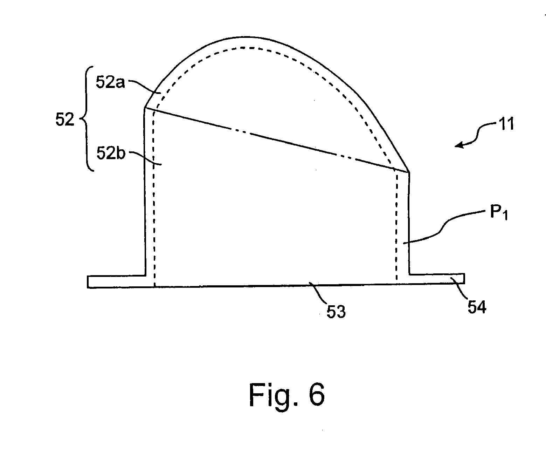

After the first drawing step, a drawing process is further conducted with respect to the thick tube member 11 having the first drawn configuration (second drawing step), thus providing a second drawn configuration as shown in FIG. 6. In this case, the cylindrical portion 52 shown in FIG. 5 is pressed so that its top end is swelled outwardly so as to have a circular-arc configuration, thus forming a swelled portion 52a. A portions (i.e., rear end side cylindrical portion) other than the swelled portion 52a of the cylindrical portion 52 is designated at reference numeral 52b, and this rear end side cylindrical portion 52b corresponds to the base portion 11a of the completed thick tube member 11 shown in FIG. 1 and others.

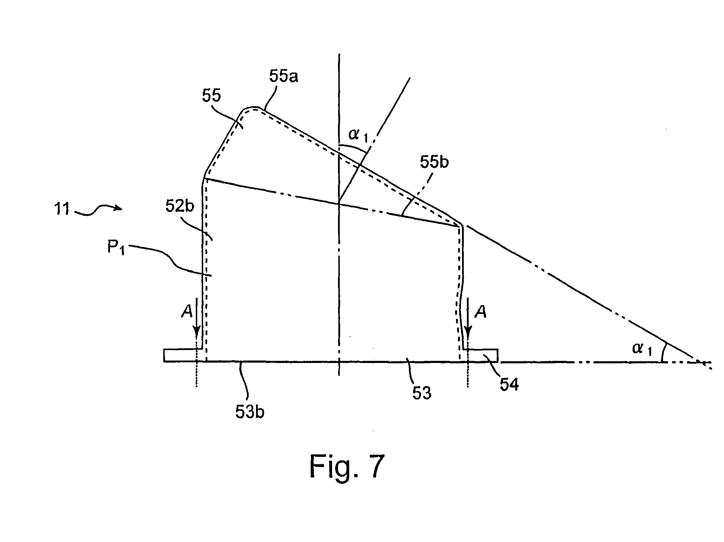

After the second drawing step, the thick tube member 11 having the second drawn configuration as shown in FIG. 6 is pressed using a finishing die, not shown, (forming step) so that, as shown in FIG. 7, the swelled portion 52a is shaped into a sloped portion 55 having, at its top end side, a first surface 55a sloped by a first angle α₁ with respect to a rear end side 53b of the cylindrical portion and a second surface 55b formedbetween the first surface 55a and the rear end side cylindrical portion 52b. This sloped portion 55 corresponds to the bent portion 11b of the completed thick tube member 11 shown in FIG. 1 and others.

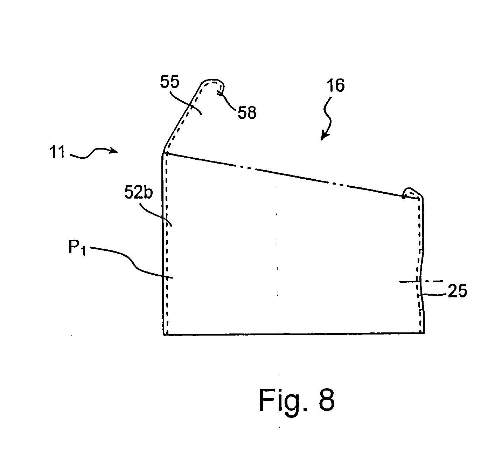

Following this, as indicted by arrows A in FIG. 7, the flange portion 54 is cut off and the after-treatment (flange-up treatment) is carried out for trimming up the cut-off surface.
In addition, in a punching step, a top end side of the sloped portion 55 formed in the shaping step, i.e., the first surface 55a, is punched as shown in FIG. 8 and a burring process is conducted thereon, thus forming the second opening 16 having a flange 58 at its circumferential edge. Still additionally, a vent hole 25 is bored in a rear end side portion of the cylindrical portion 52b located downwardly with respect to the sloped first surface 55a, thereby reaching the completion of the thick tube member 11.

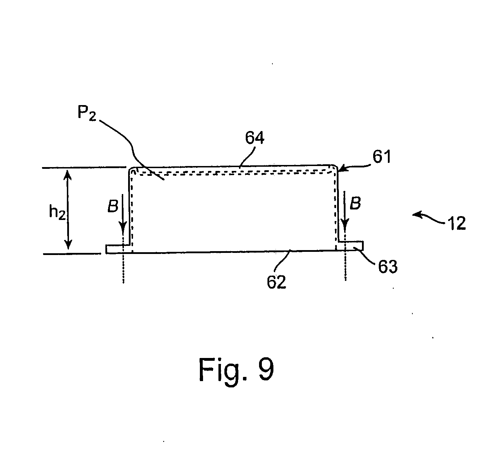

Secondly, a description will be given hereinbelow of a method of producing the second member 12. As shown in FIG. 9, a drawing process is carried out with respect to a metal plate P₂ so as to form a protrusion 61 having a circular horizontal cross section and a protruding vertical cross section. Moreover, a top end surface of the protrusion 61 is made to be slightly hollowed at its central portion. This protrusion 61 has a flange portion 63 at an outer-circumferential edge of a lower opening 62, and this flange portion 63 works as a support surface to be held by a processing machine, not shown.
In addition, in this case, the drawing process also serves as a shaping step in the production process for the thick tube member 11, and this is because the height h₂ of the protrusion 61 of the thin tube member 12 is lower than the height h₁ of the protrusion 52 of the thick tube member 11 shown in FIG. 5 and, hence, unlike the thick tube member 11, the processing process becomes feasible without carrying out the first and second drawing steps.

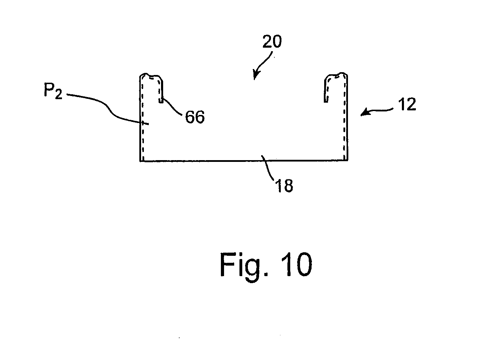

Following this, as indicated by arrows B in FIG. 9, the flange portion 63 is cut off and the after-treatment (flange-up treatment) is carried out for trimming up the cut-off surface.
Thereafter, the top end surface 64 of the thin tube member 12 shown in FIG. 9 undergoes the punching process and the burring treatment, thus forming a fourth opening 20 equipped with a flange 66 (corresponding to the filler ring 21) as shown in FIG. 10 and reaching the completion of the thin tube member 12.

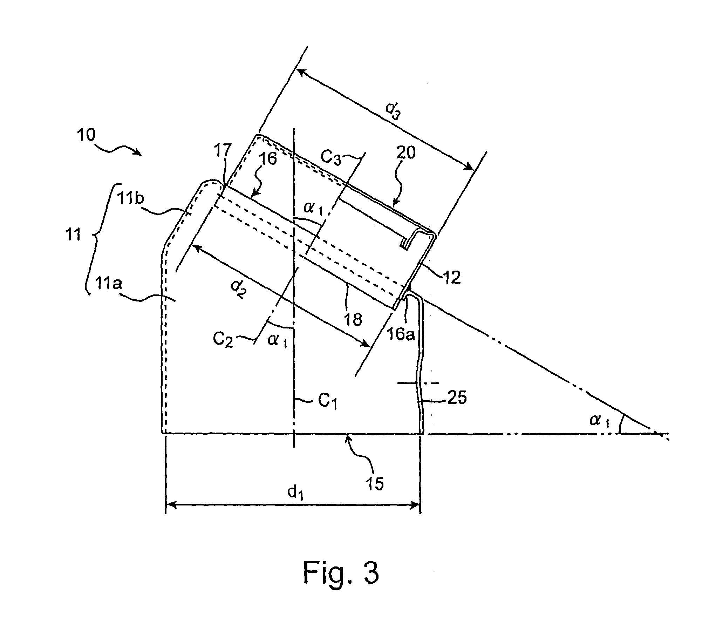

Moreover, as shown in FIG. 3, after the thin tube member 12 is inserted into the second opening 16 of the thick tube member 11, the thick tube member 11 and the thin tube member 12 are brazed throughout their entire circumferences by a brazing filler metal to be fixedly secured to each other, thereby completing the filler neck 10.
As described above, a structure of filler neck on a fuel tank according to the embodiment of the present invention can not only facilitate the fixture between the thick tube member 11 and the thin tube member 12 but also contribute to the improvement of productivity and even dispose the thin tube member 12 with respect to the thick tube member 11 at an angle α₁ made between the first opening 1 of the thick tube member 11 and the second opening 16 thereof, which improves the workability of the filling to the fuel tank 13. In addition, this structure can enhance the degree of freedom of the mounting position of the fuel tank 13 on a vehicle.

That is, as shown in FIG. 11, even in a case in which a fuel tank having this filler neck 10 is mounted under a suspension member 102 of a vehicle such as load-carrying platform, the filling nozzle 101 can easily be inserted into the filler neck 10, which results in the enhancement of filling performance.
In addition, the overall length of the filler neck 10 can be shortened, which provides an advantage in that, particularly, in the case of vehicles (for example, trucks) in which the fuel tank 13 is installed in a space near the vehicle' s outer circumference, an issue that the filler neck 10 protrudes from the vehicle's outer circumference (see a two-dot chain line L₁ in FIG. 11) is avoidable.

Still additionally, the thick tube member 11 is produced through the first and second drawing steps and the shaping step, which can prevent the thick tube member 11 from cracking in the production process, thus contributing to further improvement of productivity.
Yet additionally, since the vent hole 25 is made in the thick tube member 11 so as to be positioned under the fuel tank 13 when the filler neck 10 is fixed with the fuel tank 13, as shown in FIG. 12, the air in the fuel tank 13 can promptly be discharged through the vent hole 25 and the filler opening 20 to the exterior of the fuel tank 13 during the filling operation.

Moreover, the thin tube member 12 is equipped with the filler ring 21 and the outer diameter of the thin tube member 12 is set to form a straight configuration, which increases the airtightness of the fuel tank 13 and upgrades the attachment/detachment performance of the cap 19.
Although the outer-circumferential end of the cap 19 is shaped so as to cover an end portion of the thin tube member 12 (i.e., end portion of the filler opening 20) for increasing the airtightness of the fuel tank 13, assuming that the thin tube member 12 is eliminated and a cap 19' is directly attached/detached to/from the thick tube member 11, there is a need to form the cap 19' such that the outer-circumferential end thereof is enlarged outwardly (see an alternate long and short dash line 19' in FIG. 12). However, this makes it difficult to sufficiently cover the end portion of the thick tube member 11 with the outer-circumferential end of the cap 19' , which may degrade the airtightness (see an arrow C in FIG. 12). On the other hand, although it is also considered that a portion having a straight configuration, like the thin tube member 12, is formed integrally in the thick tube member 11, in this case, difficulty is encountered in forming the thick tube member 11 through the use of the drawing process or the shaping process. That is, when a portion having a straight configuration, like the thin tube member 12, is integrated with the thick tube member 11 through the pressing, difficulty is experienced in extracting the die from the thick tube member 11 after pressed.

On the other hand, according to the present invention, the thick tube member 11 and the thin tube member 12 are separately produced by means of a press process, thus forming the outer diameter of the thin tube member 12 into a straight configuration while increasing the production efficiency considerably. This can increase the airtightness of the fuel tank 13 and improve the attachment/detachment performance of the cap 19.
In addition, with a method of producing a structure of filler neck on a fuel tank according to the present invention, when the thick tube member 11 is produced through the first and second drawing steps and the shaping step, the thick tube member 11 is preventable from cracking, and since the thin tube member 12 and the thick tube member 11 are fixedly secured to each other after the thin tube member 12 is inserted into the second opening 16 made in the thick tube member 11, in comparison with the butt welding, the workability is considerably improvable and, further, the accuracy is improvable, which can achieve efficient production of the filler neck 10.

Although the present invention has been described above, it should be understood that the present invention is not limited to the above-described embodiment, and that it is intended to cover all changes and modifications of the embodiments of the invention herein which do not constitute departures from the spirit and scope of the invention.

### INDUSTRIAL APPLICABILITY

The present invention can be suitably used only for fuel tanks equipped with a vehicle, but also fuel tanks equipped with such transportation device as ships or airplane.

## Claims

1. A structure of filler neck on a fuel tank for a vehicle comprising:
a first tube member having,
a first opening formed at one end of said first tube member and
a second opening which is in a first angle with respect to an edge of said first opening and is formed at another end of said first tube member; and
a second tube member, whose outer diameter is slightly smaller than inner diameter of said second opening formed at said first tube member, inserted to said second opening so that second tube member is fixed with said first tube member.

2. A structure of filler neck on a fuel tank for a vehicle as set forth in claim 1, wherein
said first tube member is made by steps of;
drawing a metal plate to cylindrical in shape,
swelling a top end of the cylindrical shaped metal plate after the drawing,
forming a sloped portion which is at the first angle with respect to a bottom end of the cylindrical shaped metal plate after the swelling in such a manner that deforming the swelled top end of cylindrical shaped metal plate, and
a punching step that is making said second opening at the sloped portion after the forming.

3. A structure of filler neck on a fuel tank for a vehicle as set forth in claim 1, wherein
said second tube member has
a filler orifice and
a connector for releasably engaging with a cap covering said filler orifice,
said second tube member is constant in outer diameter and is straight cylindrical tube in shape.

4. A method for producing a structure of filler neck on a fuel tank for a vehicle, the structure including;
a first tube member having,
a first opening formed at one end of the first tube member and
a second opening which is in a first angle with respect to an edge of the first opening and is formed at another end of the first tube member; and
a second tube member, whose outer diameter is slightly smaller than inner diameter of said second opening formed at said first tube member, inserted to and fixed in the second opening,
said method comprising steps of:
a first drawing step that is drawing a metal plate to cylindrical in shape,
a second drawing step that is swelling a top end of the cylindrical shaped metal plate after said first drawing step,
an forming step that is forming a sloped portion which is at the first angle with respect to a bottom end of the cylindrical shaped metal plate after said second drawing step in such a manner that deforming the swelled top end of cylindrical shaped metal plate, and
a punching step that is making said second opening at the sloped portion after said forming step.

## Amended claims

### Amended claims under Art. 19.1 PCT

**1.** A structure of filler neck on a fuel tank for a vehicle comprising:
a first tube member having,
a first opening formed at one end of said first tube member and
a second opening which is in a first angle with respect to an edge of said first opening and is formed at another end of said first tube member; and
a second tube member inserted to said second opening so that second tube member is fixed with said first tube member.

**2.** A structure of filler neck on a fuel tank for a vehicle as set forth in claim 1, wherein
said first tube member is made by steps of;
drawing a metal plate to cylindrical in shape,
swelling a top end of the cylindrical shaped metal plate after the drawing,
forming a sloped portion which is at the first angle with respect to a bottom end of the cylindrical shaped metal plate after the swelling in such a manner that deforming the swelled top end of cylindrical shaped metal plate, and
a punching step that is making said second opening at the sloped portion after the forming.

**3.** A structure of filler neck on a fuel tank for a vehicle as set forth in claim 1, wherein
said second tube member has
a filler orifice and
a connector for releasably engaging with a cap covering said filler orifice,
said second tube member is constant in outer diameter and is straight cylindrical tube in shape.

**4.** A method for producing a structure of filler neck on a fuel tank for a vehicle, the structure including;
a first tube member having, a first opening formed at one end of the first tube member and
a second opening which is in a first angle with respect to an edge of the first opening and is formed at another end of the first tube member; and
a second tube member inserted to and fixed in the second opening, said method comprising steps of:
a first drawing step that is drawing a metal plate to cylindrical in shape,
a second drawing step that is swelling a top end of the cylindrical shaped metal plate after said first drawing step,
an forming step that is forming a sloped portion which is at the first angle with respect to a bottom end of the cylindrical shaped metal plate after said second drawing step in such a manner that deforming the swelled top end of cylindrical shaped metal plate, and
a punching step that is making said second opening at the sloped portion after said forming step.

Statement under Art. 19.1 PCT
Claims 1 and 4 have been amended by deleting "whose outer diameter is slightly smaller than inner diameter of said second opening formed at said first tube member" in the original claims 1 and 4, which amendment is to clarify subject matter of the present invention.
